# EUROPEAN PATENT APPLICATION

(11) **EP 4 089 388 A1**
(43) Date of publication of application: **16.11.2022**
(21) Application number: 21173271.4
(22) Date of filing: 11.05.2021
(51) Int. Cl.: G01M 7/00, G01H 17/00, G06F 17/11

(54) **COMPUTER IMPLEMENTED METHOD OF DETERMINING A TRANSFER FUNCTION OF A MODULE OR A COMPONENT AND GENERATING SUCH COMPONENT**

(71) Applicant: Siemens Industry Software NV, 3001 Leuven (BE)
(72) Inventor: GELUK, Theo, 4691 L Tholen (NL)
(74) Representative: Maier, Daniel Oliver

(57) **Abstract**

The invention relates to a method of determining a transfer function (TRF) of a module (MDL). To improve accuracy of such methods the invention proposes the steps:
a. measuring a first set-of-sensors-output (SO1) and a second set-of-sensors-output (S02) respectively using sensors (SS1, SS2) applied to said module (MDL),
b. identifying parameters (ICH) relating to mass and/or inertia and/or damping and/or stiffness of said module (MDL) by rigid body estimation (RBE) from said measurements,
c. fitting a first model (RB1) to identified inertia characteristics/parameters (ICH),
d. generating a synthetic second set-of-sensors-output (ST2) of said second set-of-sensors (SS2) by said first model (RB1),
e. comparing said synthetic second set-of-sensors-output (S02) with said measurements,
f. estimating a Euler-angle correction (EAC) for said second set-of-sensors (SS2).

## Description

### FIELD OF THE INVENTION

The invention relates to determining transfer functions - in particular frequency response functions - of modules of a component and of the component itself. Further, the invention relates to designing a component by frequency based substructuring using a method of determining frequency response functions of modules as mentioned before and generating said component.

Frequency Based Substructuring [FBS] - also called dynamic substructuring - is a method widely used in the industry for assembling module transfer functions, more specific Frequency Response Functions [FRFs] to determine the complete system respectively complete component's dynamic behavior. Its advantages include:
a) enabling rapid evaluation of the complete dynamic behavior of the system when changing individual, subsystems/components, allowing for a faster design cycle,
b) combining analytical/numerical model with measured components for hybrid analysis,
c) convenient workaround if a system/component is difficult to measure.

### BACKGROUND OF THE INVENTION

Most methods devised for FBS require matrix inversion of the measured FRF matrices which are involved in the coupling of individual components. As errors introduced by means of measurement propagate, these errors become a major obstacle to obtaining accurate results.

Conventionally, accuracy problems resulting from measurement being amplified by post measurement processing comprise the following approaches:
- Averaging of upper and lower triangle of the FRF-coupling matrices results in reciprocal coupling terms in the FRF matrix. This may suppress inversion problems, but it doesn't fundamentally solve the reason why upper and lower triangle components in the FRF matrix are non-reciprocal. The result can still be error prone, as the averaging result is fully dependent on the 'errors' made in either the upper or the lower triangle matrix;
- Removal of non-reciprocal terms in the coupling matrix may - as above - stabilize the inversion but does not solve the underlying problem;
- Fitting a model through the measured transfer function and imposing reciprocal behavior on this model to synthesize a reciprocal coupling matrix. As above, this can stabilize the inversion, but fully maintains the errors present in the coupling matrix. The coupling results are unlikely to be improved;
- From "Evaluation of the FRF based substructuring and modal synthesis technique applied to vehicle FE data, Jan 2000, K. Cuppens, P. Sas, L. Hermans" a fundamental FRF based substructuring methodology is known.
- "Road Noise assessment using component-based TPA for a tire, 2018, F. Bianciardi, J. Ortega Almiron, E. Risaliti, P. Corbeels" is a more recent reference on using FBS in context of component transfer path analysis [TPA] aiming to maximize the coupling quality;
- Further, Euler angle identification is done in literature, for example involving inertial measurement units (DC accelerometers, gyroscopes, magnetometers). This is known from e.g. "Diversified redundancy in the measurement of Euler angles using accelerometers and magnetometers, 2007, Chirag Jagadish; Bor-Chin Chang".

It is one object of the invention to improve the accuracy of determining FRF and the accuracy of FBS and to fnally improve the quality of components generated on basis of these procedures.

### SUMMARY OF THE INVENTION

To avoid above referenced problems of inaccuracy the invention proposes a method according to the incipiently type with the features according to the invention as defined by independent claim 1:
a. measuring a first set-of-sensors-output using a first set-of-sensors applied to said module and measuring a second set-of-sensors-output using a second set-of-sensors applied to said module,
b. identifying parameters relating to mass and/or inertia and/or damping and/or stiffness of said module by rigid body estimation from said measurements,
c. fitting a first model to identified inertia characteristics/parameters enabling a determination of a synthetic second set-of-sensors-output of said second set-of-sensors from said first set-of-sensors-output of said first set-of-sensors,
d. generating a synthetic second set-of-sensors-output of said second set-of-sensors by said first model,
e. comparing said synthetic second set-of-sensors-output with said measured second set-of-sensors-output determining a first difference,
f. estimating a Euler-angle correction for said first set-of-sensors by minimizing the first difference.

The dependent claims describe advantageous developments and modifications of the invention.

Said first set of sensors may preferably comprise or consist of at least one of a ceramic piezoelectric sensor, an accelerometer, an optical vibrometer or the like. Said accelerometer may be a sensor that measures the dynamic acceleration of a physical device as a voltage. Using optical laser probes may be advantageous when having light or delicate structure devices or in case of problems to physically contact the device.

Said second set of sensors may preferably comprise or consist of at least one of a piezoelectric sensor or strain-gauge sensor or the like. Said accelerometer may be a sensor that measures the dynamic acceleration of a physical device as a voltage. Using optical laser probes may be advantageous when having light structure devices or in case of problems to physically contact the device.

The method of rigid body estimation is known from e.g. Huang, Sheng-Jun & Lallement, G. (1997), "Direct Estimation of Rigid Body Properties from Harmonic Forced Responses".

The estimated mass and/or inertia and/or damping and/or stiffness parameters are used to determine a first model which may preferably be based on a rigid body model. This first model is fitted to the acquired FRF data from the measurements.

The first model enables to determine a synthetic second set-of-sensors-output from said first set-of-sensors-output of said first set-of-sensors - e.g. inputting force-related parameters (equivalent to an impact of a shaker, hammer or the like on the module) and receiving vibration related output (equivalent to resulting vibration from this input/excitation).

This first model output may be of varying quality/accuracy as reflecting the real vibration result depending on the model input parameter range. Preferably the invention selects first model input parameter ranges being likely to result in higher accuracy output of said first model. Preferably the frequency of the input in said first model is selected such that the rigid body motion lies below, preferably lies far (at least factor 2) below, the frequency range of the elastic modes. The frequency range of the elastic modes may be estimated or tested before.

From said comparison of said synthetic second set-of-sensors-output with said measured second set-of-sensors-output a first difference may be determined. This difference may be expressed as a function of Euler-angle-alignment of the second sensor set.

From this difference - or difference function - estimating a Euler-angle correction for said first set-of-sensors may therefore result in finding a minimum preferably an absolute minimum of a function (difference/ difference-function). Several tools are available for solving this numerical task.

One important understanding underlying the invention is that the misalignment of the Euler angles of the exciters and sensors (shaker, accelerometer, etc.) poses a significant threat to the overall quality of the FRFs and an even more significant problem for the accuracy of the FBS-synthesized FRFs. The invention determined that one reason for said sensitivity may lie in an error amplification effect like that a 5% of error in a single module FRF, e.g. a tire FRF, may result in more than 10% change in a two-module-component FRF based on the coupling of e.g. two module FRFs. Consequently, Euler angle alignment requires a higher order of accuracy which implies that even the most experienced engineers cannot satisfy sensor alignment accuracy requirements to obtain FRFs accurate enough for FBS-synthesis.

For additional accuracy of the module's FRF determination the determination of excitation of the module may be improved in accuracy, too. To eliminate the potential error on both process interfaces (excitation, response) it is proposed to perform the additional steps of:
g. determining a second model enabling a determination of said first set-of-sensors-output from said second set-of-sensors-output of said second set-of-sensors,
h. generating a synthetic first set-of-sensors-output of said first set-of-sensors by said second model,
i. comparing said synthetic first set-of-sensors-output with said measured first set-of-sensors-output determining a second difference,
j. estimating a Euler-angle correction for said second set of sensors by minimizing the second difference.

The second model may be an inverse model of said first model to enable the reciprocal process of determining the synthetic first set-of-sensors-output from inputting said second set-of-sensors-output. Since the Euler-angle correction according to step j. is done subsequently to step f.'s Euler angle correction step j. may preferably be done based on applying said Euler-angle correction and setting the corrected first set-of-sensors-output as first set-of-sensors-output for subsequent steps. Generally corrected Euler angles may be applied after determination of said correction for subsequent processing for improved accuracy.

The preferred field of application of the invention may be modal analysis and the transfer function may preferably a frequency response function.

The invention may preferably be used when determining a transfer function respectively a frequency response function of a component comprising several modules by frequency based substructuring, wherein in said component at least two modules are combined, comprising the steps of:
- determining a transfer function of a module applying a method according to the preceding description and to the claims and
- coupling the obtained transfer functions generating a component transfer function respectively frequency response function.

Method steps or sets of method steps according to the invention may be performed repeatedly preferably in a recursive manner (successive results respectively are based on at least the preceding result) to improve accuracy of the results. Further the invention relates to a computer implemented method of generating a component comprising the method according to the preceding description and to the claims. The method preferably may comprise:
defining a should-state of a transfer function of said component,
selecting at least one design parameter of a module (MDL) of said component (CMP) to be changed to influence the transfer function of said component (CMP),
performing and/or repeating the following process steps (I). - (IV). for said selected design parameter(s) until said transfer function of said component (CMP) complies with the should-state:
   (I). selecting one of said selected design parameter(s),
   (II). performing said method of determining a transfer function of a component by frequency based substructuring (according to claim 9),
   (III). changing said selected design parameter and performing the method of determining a transfer function of a component by frequency based substructuring (according to claim 9) with the changed design parameter,
   (IV). comparing the transfer functions of the component before and after changing said design parameter,
generating said component with changed design parameters.

Further, the invention relates to a computer-system being adapted to carrying out a method of the above defined type.

Further, the invention relates to a computer-readable medium encoded with executable instructions, that when executed, cause the above referenced computer system to carry out a method according to the invention.

In general, a computer-implemented method according to the invention is one which involves the use of a computer, computer network or other programmable apparatus, where one or more features are realized wholly or partly by means of a computer program. Every method step according to the invention which may be understood in the light of the description or the claims by a person with ordinary skill in the art to be done as a computer-implemented step may be considered as a computer-implemented step of the method. The computer-implemented method may contain some steps to be done without the computer.

Advantageous configurations and embodiments of the method according to the invention follow from the claims as well as aspects of the following descriptions.

### BRIEF DESCRIPTION OF THE DRAWINGS

Embodiments of the invention are now described, by way of example only, with reference to the accompanying drawings, of which:
- Figure 1: shows a schematic diagram illustrating the method-steps according to the invention and the system according to the invention;
- Figure 2: schematically shows the effect of the method according to the invention illustrated symbolically by sensor alignment;
- Figure 3: compares diagrams of an uncorrected transfer function and corrected transfer function (respectively level and phase);
- Figure 4: illustrates schematically Frequency Based Substructuring [FBS];
- Figure 5: schematically illustrates the method of generating a component according to the invention.

The illustration in the drawings is in schematic form respectively. It is noted that in different figures, similar or identical parameters may be provided with the same reference signs.

### DESCRIPTION OF THE DRAWINGS

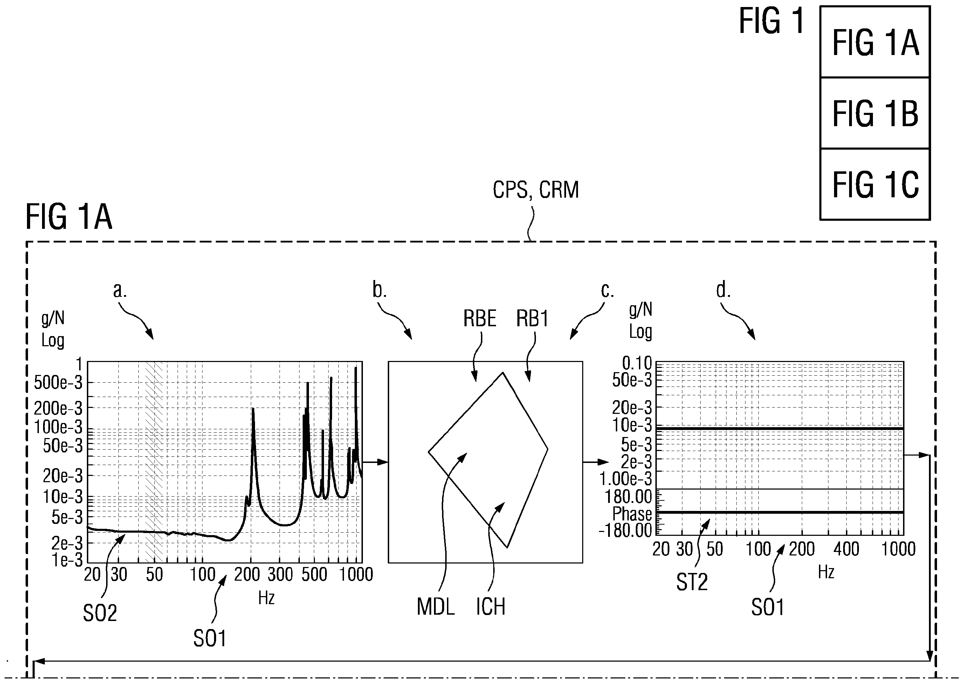

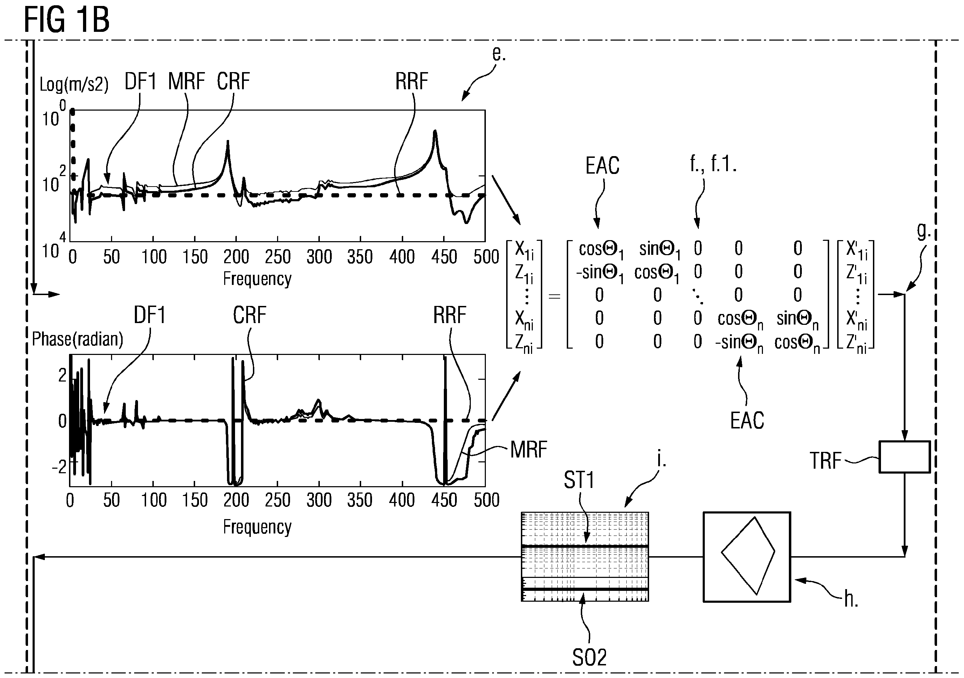

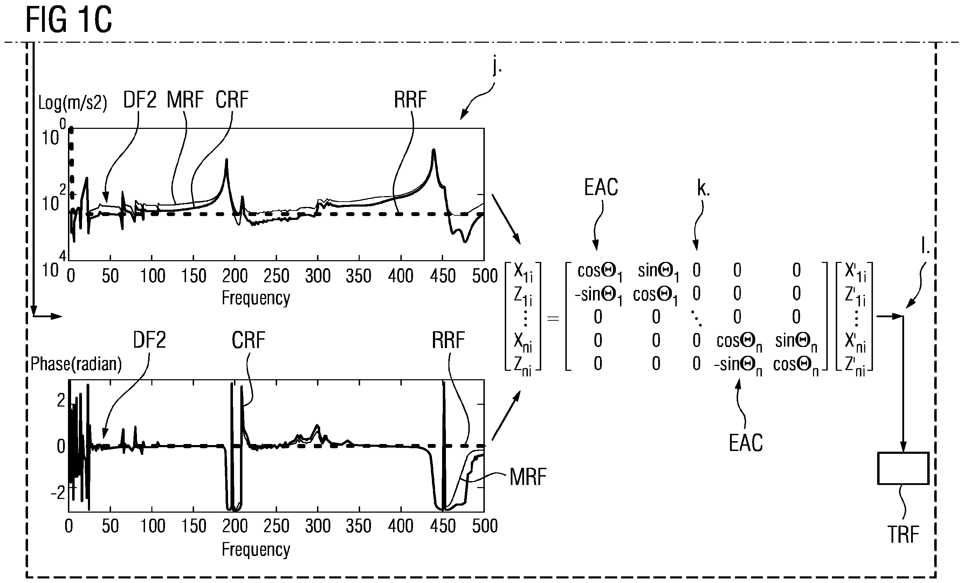

Figure 1 shows a schematic illustration of the method-steps according to the invention as well as a computer-system CPS and a computer readable medium CRM encoded with executable instructions, that when executed, cause the computer system CPS (according to claim 11) to carry out a method according to the invention. The computer system CPS may be a personal computer, a computer network comprising computational resources or a mobile device or similar means.

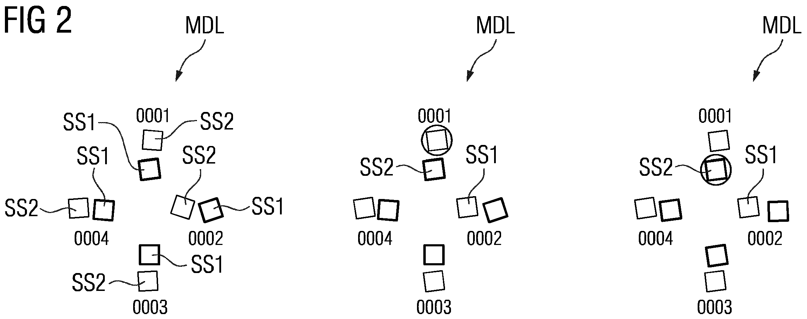

Figure 1 illustrates said computer implemented method of determining a transfer function TRF of a module MDL comprising the steps:
a. measuring a first set-of-sensors-output SO1 using a first set-of-sensors SS1 (shown in figure 2) applied to said module MDL and measuring a second set-of-sensors-output SO2 using a second set-of-sensors SS2 (shown in figure 2) applied to said module MDL,
b. identifying parameters ICH relating to mass and/or inertia and/or damping and/or stiffness of said module MDL by rigid body estimation RBE from said measurements,
c. fitting a first model RB1 to identified inertia characteristics/parameters ICH enabling a determination of a synthetic second set-of-sensors-output ST2 of said second set-of-sensors SS2 (shown in figure 2) from said first set-of-sensors-output SO1 of said first set-of-sensors SS1 (shown in figure 2),
d. generating a synthetic second set-of-sensors-output ST2 of said second set-of-sensors SS2 (shown in figure 2) by said first model RB1,
e. comparing said synthetic second set-of-sensors-output SO2 with said measured second set-of-sensors-output SO2 determining a first difference DF1,
f. estimating a Euler-angle correction EAC for said first set-of-sensors SS1 by minimizing the first difference DF1, f.1. correcting said measured first set-of-sensors-output SO1 by applying said Euler-angle correction EAC and setting the corrected first set-of-sensors-output SO1 as first set-of-sensors-output SO1 for subsequent steps.

Further the method illustrated comprises the steps of:
g. determining a second model RB2 enabling a determination of said first set-of-sensors-output SO1 from said second set-of-sensors-output SO2 of said second set-of-sensors SS2 (shown in figure 2),
h. generating a synthetic first set-of-sensors-output SO1 of said first set-of-sensors SS1 (shown in figure 2) by said second model RB2,
i. comparing said synthetic first set-of-sensors-output SO1 with said measured first set-of-sensors-output SO1 determining a second difference DF2,
j. estimating a Euler-angle correction EAC for said second set of sensors SO2 by minimizing the second difference DF2
j.1. correcting said measured second set-of-sensors-output SO2 by applying said Euler-angle correction EAC and setting the corrected second set-of-sensors-output SO2 as said second set-of-sensors-output SO2 for subsequent steps.

Figure 2 shows the effect of the method steps. Before correction of the Euler angles Θ said second set-of-sensors SS2 and first set-of-sensors SS1 are basically in a random individual alignment (manually done) - not sufficiently accurate aligned to each other. After applying the steps a.- f. the sensors of said second set of sensors SS2 are algorithmically aligned to each other by Euler angle correction EAC. After applying the additional method steps g. - j. the sensors of said first set of sensors SS1 are aligned to each other and are aligned to said second set of sensors SS2.

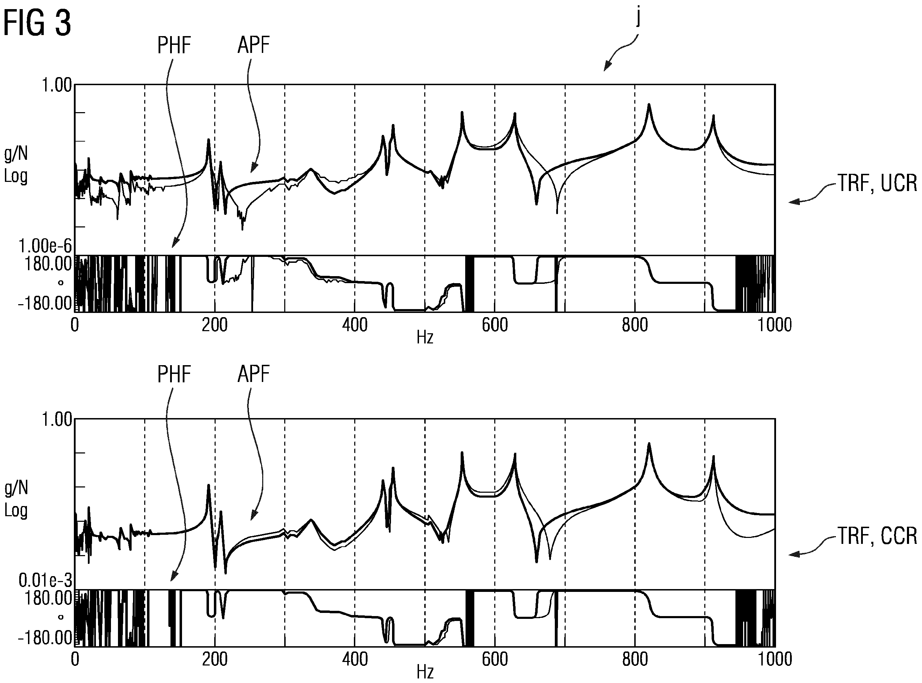

Figure 3 shows the uncorrected transfer function TRF in the upper part and the corrected transfer function TRF (both being a frequency response function FRF) in the lower part respectively, an intensity-function and the phase-function of the frequency. The corrected transfer function TRF shows a smaller deviation between the measurements of the single sensors.

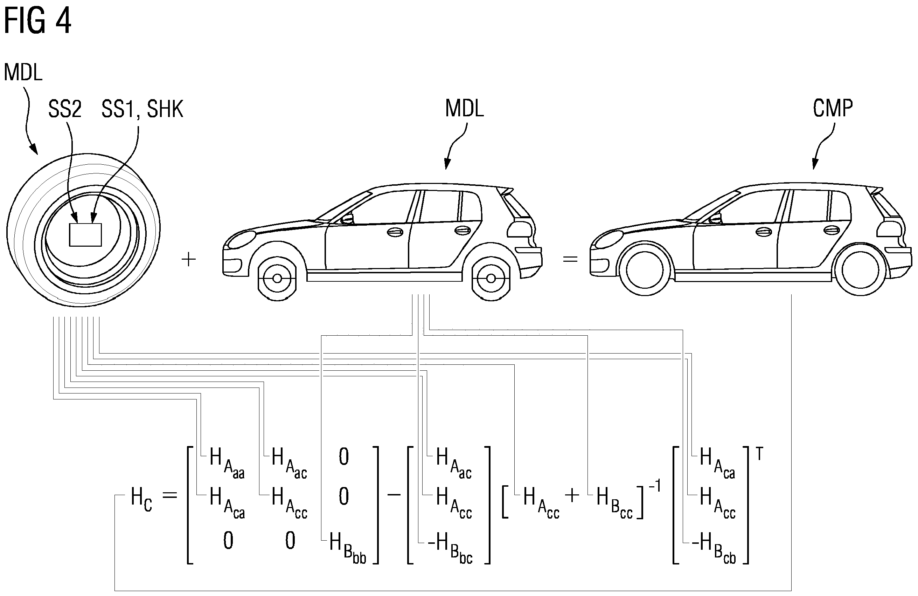

Figure 4 illustrates schematically Frequency Based Substructuring [FBS] combining two modules MDL (four tires = first module MDL, the rest of the vehicle without tires = second module MDL) to result in the complete component CMP. The first module MDL respectively the tires are equipped with the second set of sensors SS2 , and a shaker SHK comprises a first set of sensors SS1. For example, the second set of sensors may comprise nine accelerometers to monitor the vibrations caused by the shaker SHK. Since the tire center does physically not exist due to the hole for the vehicle-axle the sensors of the second set of sensors SS2 are normally arranged around the hole. The second module MDL of the component CMP may be equipped with sensors sets, too, and the method according to the invention may be applied there as well. The overall transfer function TRP is a frequency response function FRF and may be obtained by combining the two transfer functions TRP of the modules MDL involved, as illustrated below the pictures of the vehicle respectively the tire as an equation of matrices. The contributions of the single transfer functions TRP of the respective modules MDL to the transfer function TRF of the complete component CMD is indicated by lines drawn between the respective module MDL and the metrics equation elements below the pictures (tire parameters are indicated by subscripted 'A', rest-vehicle parameters are indicated by subscripted 'B', component parameters are indicated by subscripted 'C'). When combining the single transfer functions TRP it becomes necessary to make a matrix inversion (circled term) which leads to error-amplification. If the single transfer functions TRP of the modules MDL to be combined are not sufficiently accurate, the error amplification may lead to inacceptable results. In this context the correct Euler angle alignment is essential and the correction introduced by the invention of high importance.

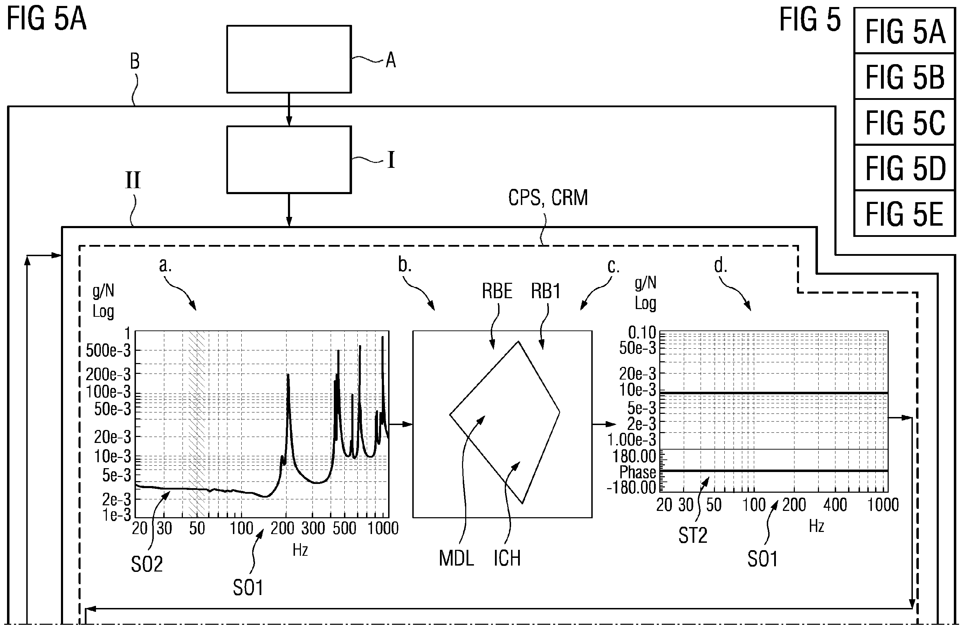

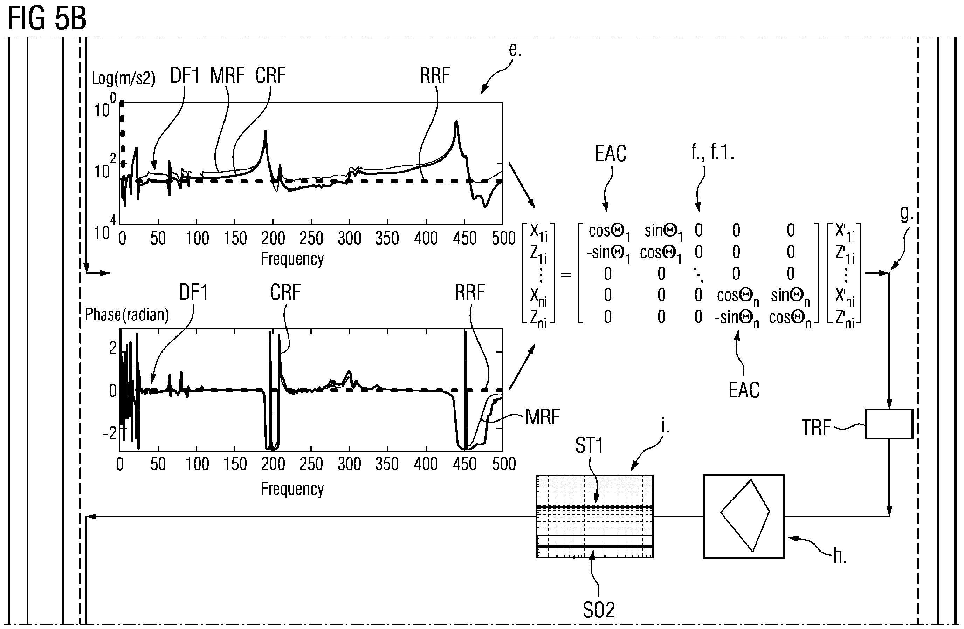

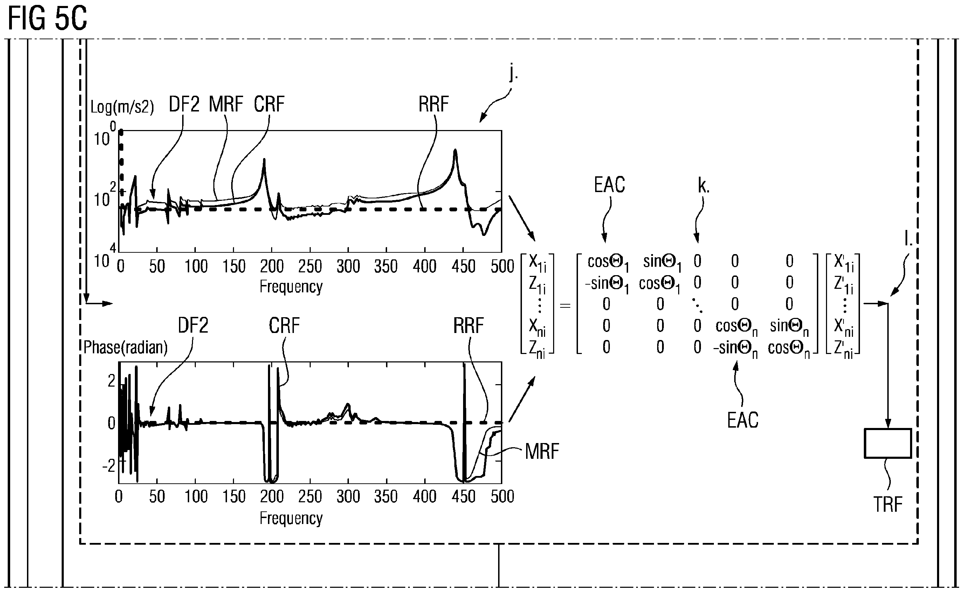

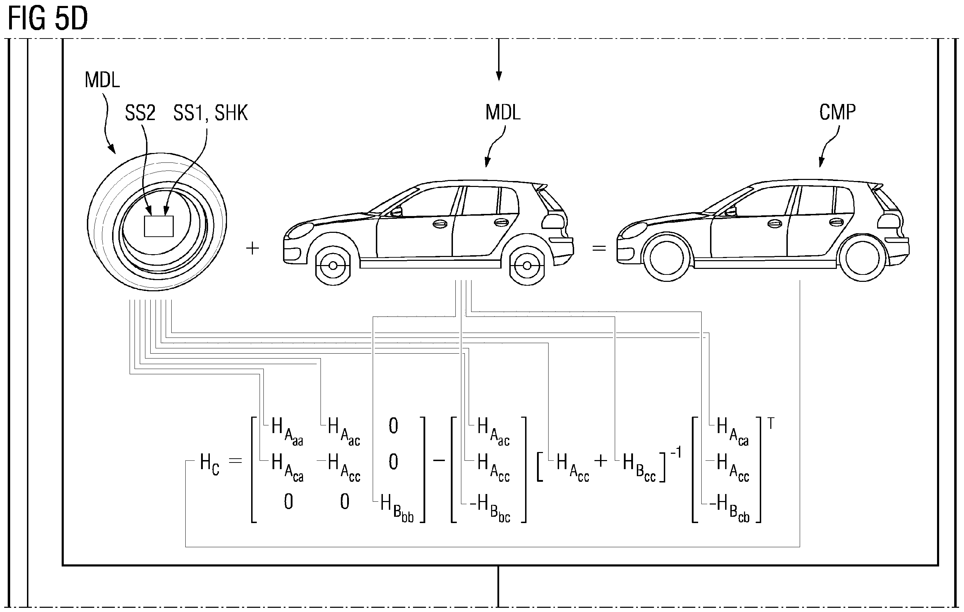

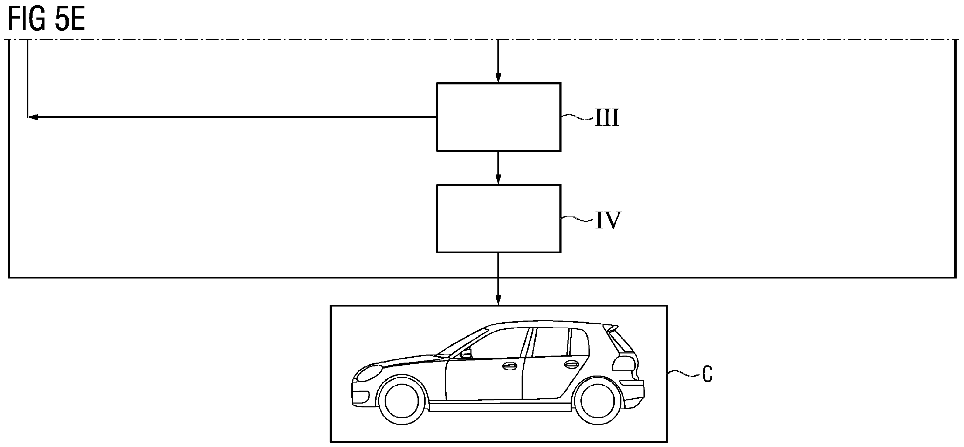

Figure 5 schematically illustrates a computer implemented method of generating a component CMP according to the invention. Initially a should-state of a transfer function of said component may be defined, like low noise in a vehicles compartment when driving along a specific road paving roughness.

In a step A. at least one design parameter of a module MDL of said component CMP to be changed to influence the transfer function of said component CMP is selected. During step B. the following process steps (I). - (IV) are performed or repeated for said selected design parameter(s) until said transfer function of said component (CMP) complies with the predefined should-state:
(I). selecting one of said selected design parameter(s),
(II). performing the method according to claim 9,
(III). changing said selected design parameter and performing the method according to claim 9 with the changed design parameter,
(IV). comparing the transfer functions of the component (CMP) before and after changing said design parameter.
During a final step C. said component with changed design parameters is generated.

Although the present invention has been described in detail with reference to the preferred embodiment, it is to be understood that the present invention is not limited by the disclosed examples but by the scope defined by the claims, and that numerous additional modifications and variations could be made thereto by a person skilled in the art without departing from the scope of the invention defined by the independent claims.

It should be noted that the use of "a" or "an" throughout this application does not exclude a plurality, and "comprising" does not exclude other steps or parameters. Also parameters described in association with different embodiments may be combined. It should also be noted that reference signs in the claims should not be construed as limiting the scope of the claims.

## Claims

1. Computer implemented method of determining a transfer function (TRF) of a module (MDL) comprising the steps:
a. measuring a first set-of-sensors-output (SO1) using a first set-of-sensors (SS1) applied to said module (MDL) and
measuring a second set-of-sensors-output (SO2) using a second set-of-sensors (SS2) applied to said module (MDL),
b. identifying parameters (ICH) relating to mass and/or inertia and/or damping and/or stiffness of said module (MDL) by rigid body estimation (RBE) from said measurements,
c. fitting a first model (RB1) to identified inertia characteristics/parameters (ICH) enabling a determination of a synthetic second set-of-sensors-output (ST2) of said second set-of-sensors (SS2) from said first set-of-sensors-output (SO1) of said first set-of-sensors (SS1),
d. generating a synthetic second set-of-sensors-output (ST2) of said second set-of-sensors (SS2) by said first model (RB1),
e. comparing said synthetic second set-of-sensors-output (SO2) with said measured second set-of-sensors-output (SO2) determining a first difference (DF1),
f. estimating a Euler-angle correction (EAC) for said second set-of-sensors (SS2) by minimizing the first difference (DF1).

2. Method according to claim 1, comprising the additional steps of:
g. determining a second model (RB2) enabling a determination of said first set-of-sensors-output (SO1) from said second set-of-sensors-output (SO2) of said second set-of-sensors (SS2),
h. generating a synthetic first set-of-sensors-output (SO1) of said first set-of-sensors (SS1) by said second model (RB2),
i. comparing said synthetic first set-of-sensors-output (SO1) with said measured first set-of-sensors-output (SO1) determining a second difference (DF2),
j. estimating a Euler-angle correction (EAC) for said first set of sensors (SS1) by minimizing the second difference (DF2).

3. Method according to claim 1, wherein the step of:
f. estimating a Euler-angle correction (EAC) for said first set-of-sensors (SS1) includes:
f.1. correcting said measured first set-of-sensors-output (SO1) by applying said Euler-angle correction (EAC) and setting the corrected first set-of-sensors-output (SO1) as first set-of-sensors-output (SO1) for subsequent steps.

4. Method according to claim 2, wherein the step of:
j. estimating a Euler-angle correction (EAC) for said second set of sensors includes:
j.1. correcting said measured second set-of-sensors-output (SO2) by applying said Euler-angle correction (EAC) and setting the corrected second set-of-sensors-output (SO2) as said second set-of-sensors-output (SO2) for subsequent steps.

5. Method according to at least one of the preceding claims, wherein said second model (RB2) is an inverse model of said first model (RB1).

6. Method according to at least one of the preceding claims, wherein said first set-of-sensors (SS1) comprises vibration sensors (VBS) and wherein said first set-of-sensors-output (SO1) comprises vibration characteristics.

7. Method according to at least one of the preceding claims, wherein said second set-of-sensors (SS2) comprises force sensors (FRS) and wherein said second set-of-sensors-output (SO2) comprises excitation force characteristics.

8. Method according to at least one of the preceding claims, wherein said transfer function is a frequency response function (FRF).

9. Computer implemented method of determining a transfer function of a component (CMP) by frequency based substructuring (FBS),
wherein in said component (CMP) at least two modules (MDL) are combined, comprising the steps
- determining a transfer function of a module (MDL) according to a method according to at least one of the preceding claims,
- coupling transfer functions of said modules (MDL) of said component (CMP) obtaining a component transfer function.

10. Computer implemented method of generating a component (CMP) comprising the method according to claim 9, defining a should-state of a transfer function of said component,
A. selecting at least one design parameter of a module (MDL) of said component (CMP) to be changed to influence the transfer function of said component (CMP),
B. performing and/or repeating the following process steps (I). - (IV). for said selected design parameter(s) until said transfer function of said component (CMP) complies with the should-state:
(I). selecting one of said selected design parameter(s),
(II). performing the method according to claim 9,
(III). changing said selected design parameter and performing the method according to claim 9 with the changed design parameter,
(IV). comparing the transfer functions of the component (CMP) before and after changing said design parameter,
C. generating said component with changed design parameters.

11. Computer-system (CPS) being adapted to carrying out a method according to at least one of preceding claims 1 - 10.

12. A computer-readable medium (CRM) encoded with executable instructions, that when executed, cause the computer system (CPS) according to claim 11 to carry out a method according to any one of claims 1 to 10.
